# EUROPEAN PATENT APPLICATION

(11) **EP 3 736 929 A1**
(43) Date of publication of application: **11.11.2020**
(21) Application number: 20156895.3
(22) Date of filing: 12.02.2020
(51) Int. Cl.: H02G 3/04

(54) **CABLE TRAYS**

(30) Priority: 07.05.2019 GB 201906400
(71) Applicant: Intumescent Systems Limited, Barfrestone Dover Kent CT15 7JG (GB)
(72) Inventor: Ward, Derek, Dover, Kent CT15 7JG (GB)
(74) Representative: Fry, David John

(57) **Abstract**

Apparatus for conveying electrical cabling between adjoining rooms and spaces of a building comprises a cable tray which, in use, passes through an opening formed in a wall or ceiling between adjoining rooms or spaces, and an annular sleeve which extends around the entire external periphery of at least one lengthwise section of the tray. The annular sleeve comprises an inner layer of a sponge material whose innermost face is impregnated or coated with an intumescent material and an outer lining of reinforced metallic foil which, in the event of a fire occurring, causes the intumescent material to expand inwardly only or predominately towards the cable tray.

## Description

This invention relates to cable trays for retaining and conveying electrical cabling safely between rooms and other areas of a building.

Electrical cabling which passes through openings in walls and ceilings of a building (particularly fire walls and ceilings) presents a fire hazard to the extent that the openings through which the cabling passes enable fire and smoke to pass rapidly from a fire source to adjoining rooms or open spaces unless measures are taken to prevent this occurring. In many instances no such measures are taken.

Dry lining boxes are on occasion employed to inhibit the passage of fire and smoke; however, such use has been known to cause cables to ignite, thereby exacerbating the consequences of a fire.

Our International Application WO 2004/013528 discloses a cover for a conduit fitting which comprises sheets of preformed flexible cellular fire-retardant foam or sponge joined together by an intumescent adhesive to form a cover open on one of its sides and dimensioned to define a reasonably snug fit about the external walls of an open-sided conduit fitting. Each sheet is coated firstly with a primer solution including a sealant and secondly with a flowable coating of a fire-retardant material. The primer solution operates to close the open pores of the surface and provides a bond to which the fire-retardant coating can adhere.

Whereas these covers have proved to be extremely successful in providing security against the spread of fire with enhanced sound proofing qualities, it has been found that there is a need to ensure that movement between the cover and the protected conduit fitting is eliminated or, at least, minimised.

Our UK Patent 2435576 concerns a cover for a conduit fitting for location within a wall recess which comprises sheets of preformed flexible cellular fire-retardant foam sponge joined together by an intumescent adhesive to form a cover open on one of its sides and dimensioned to define a reasonably snug fit about the external walls of an open-sided conduit fitting, and means for securing the cover to one or more of the walls which define the recess comprising metallic fixing strips which extend from and generally normal to the base of the cover and protrude from the adjoining upstanding cover wall.

The present invention sets out to provide enhanced security against the spread of fire and smoke within a building.

According to the present invention in one aspect, the invention provides apparatus for conveying electrical cabling between adjoining rooms and spaces of a building, the apparatus comprising a cable tray which, in use, passes through an opening formed in a wall or ceiling separating adjoining rooms or spaces, and an annular sleeve which extends around the entire external periphery of at least one lengthwise section of the tray and comprises an inner layer of a sponge material whose innermost face is impregnated or coated with an intumescent material and an outer lining of reinforced metallic foil which, in the event of a fire occurring, causes the intumescent material to expand inwardly only or predominately towards the cable tray.

The sleeve may further include an inner lining of reinforced metallic foil.

The layer of sponge material may comprise a preformed flexible cellular fire-retardant foam sponge material coated with a primer solution including a sealant and an intumescent material.

The coating may comprise a primer solution which includes a sealant.

The invention will now be described by way of example only with reference to the accompanying drawings in which:-
Figure 1 is an isometric view of a cable tray in accordance with the present invention; and
Figure 2 is an isometric view of an alternative cable tray in accordance with the invention when in use.

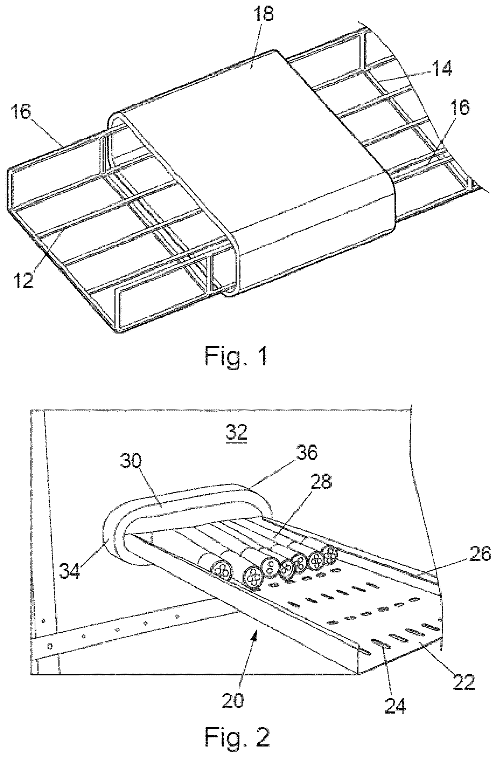

The cable tray 10 illustrated in Figure 1 is formed of a plurality of lengthwise extending spaced metal or plastics wires 12 held together by a plurality of spaced metal or plastics wires 14 which extend across the full width of the tray. The ends of the wires 14 are turned through right angles to define the sides 16 of the tray.

An annular sleeve 18 is positioned about the entire circumference of the tray and defines a relatively tight fit therewith. The length of the sleeve is generally less than that of the tray, more than one sleeve being provided for the cable tray as and when necessary. Typically, the length of the cable tray is from 50mm to 600mm, and the width of the tray is typically 54mm.

The cable tray 20 illustrated in Figure 2 differs from that of Figure 1 for reason that it comprises a length of sheet of metallic material 22 formed with a series of through-holes 24. The lengthwise extending sides of the sheet 22 are turned through right angles to define upstanding side walls 26.

An annular sleeve 18 as illustrated in Figure 1 locates about the cable tray.

Mains connected electrical cables 28 for passing electricity from one room to an adjoining room are supported on the cable tray. The tray 20 and the cables 28 are shown emerging from a through-hole 30 formed in a wall 32 of adjoining rooms of a building.

The illustrated annular sleeve has an outer lining 34 of reinforced metallic foil and an inner layer 36 of a sponge material whose inner face is impregnated or coated with an intumescent material which expands in the event of excessive heat to completely fill the through-hole thereby preventing the passage of fire and smoke from one room to another. The outer lining 34 acts to ensure that in the event of a fire occurring, the intumescent material expands predominately inwardly towards the cable tray.

It will be appreciated that the foregoing is merely exemplary of apparatus in accordance with the invention and that modifications can readily be made thereto without departing from the true scope of the invention as set out in the appended claims.

## Claims

1. Apparatus for conveying electrical cabling between adjoining rooms and spaces of a building, the apparatus comprising a cable tray which, in use, passes through an opening formed in a wall or ceiling separating adjoining rooms or spaces, and an annular sleeve which extends around the entire external periphery of at least one lengthwise section of the tray and comprises an inner layer of a sponge material whose innermost face is impregnated or coated with an intumescent material and an outer lining of reinforced metallic foil which, in the event of a fire occurring, causes the intumescent material to expand inwardly only or predominately towards the cable tray.

2. Apparatus as claimed in claim 1 wherein the sleeve further includes an inner lining of reinforced metallic foil.

3. Apparatus as claimed in claim 1 or claim 2 wherein the layer of sponge material comprises a preformed flexible cellular fire-retardant foam sponge material coated with a primer solution including a sealant and an intumescent material.

4. Apparatus as claimed in any one of the preceding claims wherein the coating comprises a primer solution which includes a sealant.
